# EUROPÄISCHE PATENTSCHRIFT

(11) **EP 0 652 404 B1**
(45) Veröffentlichungstag und Bekanntmachung des Hinweises auf die Patenterteilung: **23.07.1997**
(21) Anmeldenummer: 94117245.4
(22) Anmeldetag: 02.11.1994
(51) Int. Cl.: F23N 5/24

(54) **Brennersteuergerät mit einem nicht selbstrückstellenden Temperaturgrenzschalter**
Burner control device with a non-automatic reset temperature limit switch
Dispositif de commande de brûleur avec un commutateur limite à température à rappel non-automatique

(30) Priorität: 05.11.1993 DE 4337742
(43) Veröffentlichungstag der Anmeldung: 10.05.1995
(73) Patentinhaber: HONEYWELL B.V., NL-1101 EA Amsterdam (NL)
(72) Erfinder: Vegter, Derk, Nieuw Amsterdam (NL)
(74) Vertreter: Rentzsch, Heinz, Dipl.-Ing.

(56) Entgegenhaltungen:
- DE-A- 2 813 643
- DE-A- 3 532 229
- US-A- 5 076 780
- PATENT ABSTRACTS OF JAPAN vol. 7, no. 5 (M-184) 11. Januar 1983 & JP-A-57 164 226 (HITACHI SEISAKUSHO) 8. Oktober 1982
- PATENT ABSTRACTS OF JAPAN vol. 5, no. 83 (M-71) 30. Mai 1981 & JP-A-56 030 535 (MATSUSHITA ELECTRIC) 27. März 1981

## Beschreibung

In Zentralheizungsanlagen und ähnlichen Systemen wird eine Übertemperaturbegrenzung benötigt, die beim Überschreiten einer bestimmten Grenztemperatur den Wärmeerzeuger, z.B. einen Brenner, stillsetzt und die sich nicht selbst wieder einschaltet, wenn nach dem Stillsetzen des Brenners die Temperatur absinkt. Vielmehr muß die Wiedereinschaltung von Hand erfolgen, um sicherzustellen, daß zuvor der Anlaß für die Übertemperatur beseitigt wurde. Derartige Übertemperaturbegrenzer in Form von Bimetallschaltern mit Selbstverriegelung sind bekannt. In manchen Fällen steht jedoch nicht genügend Platz für die Unterbringung eines solchen nicht selbstrückstellenden Schalters zur Verfügung. Zeitabhängige thermostatische Schalter sind aus US-A 4 091 993 bekannt.

Die Erfindung sieht deshalb eine elektronische Schaltung zur Erzielung einer solchen nicht selbstrückstellenden Temperaturbegrenzung vor, welche als Schaltglied lediglich einen einfachen temperaturabhängigen Schnappschalter benötigt, wie er in der Form von kleinen Scheibenthermostaten zur Verfügung steht. Die Erfindung ist im Anspruch 1 gekennzeichnet und hat außer dem geringeren Raumbedarf den Vorteil, daß die Schaltungsanordnung eigensicher ist, so daß im Falle eines Kurzschlusses oder einer Stromunterbrechung im bistabilen Relais der Brenner ebenfalls abgeschaltet wird bzw. bleibt. Zu dieser Selbstüberwachung des bistabilen Relais wird die Induktivität seiner Erregerspule ausgenutzt, indem die bei einem impulsweisen Stromfluß durch die Induktivität bei der Stromabschaltung jeweils darin gespeicherte magnetische Energie in der Zeit bis zum nächsten Stromimpuls zur Aufladung eines Kondensators und damit zur Erzeugung einer positiven Aktivierungsspannung ausgenutzt wird. Diese Hilfsenergie ist für das Ingangsetzen des Brenners unerläßlich. Vorteilhafte Ausgestaltungen der Erfindung ergeben sich aus den Unteransprüchen.

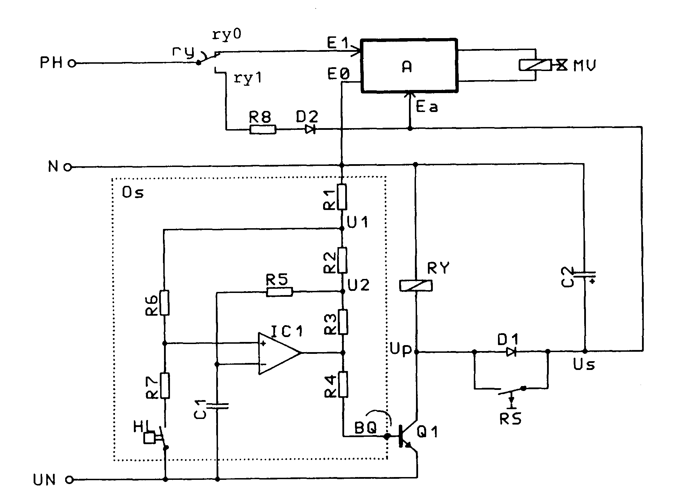

Die Erfindung wird nachfolgend anhand eines in der Zeichnung wiedergegebenen Ausführungsbeispiels erläutert. Dabei wird zunächst die strichpunktiert umrandete Oszillatorschaltung Os außer Betracht gelassen.

Ein Brennersteuergerät A ist mit seinem Eingang E1 über den Ruhekontakt ry0 eines Relais RY an die eine Klemme PH der Netzwechselspannung angeschlossen, während der andere Eingang E0 an der Masseleitung N der Netzwechselspannung liegt. Das Brennersteuergerät dient der Einschaltung eines die Brennstoffzufuhr zu einem Brenner steuernden Magnetventils MV. Außer den beiden Netzspannungseingängen E1 und E0 weist das Brennersteuergerät einen eigensicheren Aktivierungseingang Ea auf und ist derart aufgebaut, daß nur beim Vorhandensein einer Aktivierungsspannung Us am Aktivierungseingang Ea eine Hilfsenergie zum Öffnen des Magnetventils MV zur Verfügung steht.

Das positive Aktivierungssignal Us wird mit Hilfe einer aus der Diode D1 und dem Kondensator C2 bestehenden Gleichrichterschaltung erzeugt, welche der Relaiswicklung RY des bistabilen Relais parallelgeschaltet ist. Die Erregerwicklung RY liegt in Reihe mit einem Steuertransistor Q1 zwischen einer im vorliegenden Fall negativen Versorgungsgleichspannung UN und der Masseleitung N.

Im Betrieb wird davon ausgegangen, daß an der Steuerelektrode, d.h. an der Basis BQ des Steuertransistors Q1 bei normalem Betrieb eine hochfrequente Wechsel- oder Impulsspannung, von beispielsweise 10kHz liegt, während im Falle einer festgestellten Übertemperatur der Anschluß BQ mit einer den Steuertransistor Q1 ständig durchschaltenden Gleichspannung beaufschlagt wird. Die Wechsel- oder Impulsspannung hat zur Folge, daß impulsweise Strom von der Masseleitung N durch das Relais RY und den Steuertransistor Q1 zur negativen Versorgungsspannungsklemme UN fließt und zwar mit einer mittleren Stromstärke, welche nicht ausreicht, um das Relais zum Ansprechen zu bringen. In den Impulspausen, wenn der Transistor Q1 gesperrt ist, versucht bekanntlich die in der Induktivität des Relais gespeicherte magnetische Energie den Stromfluß aufrechtzuerhalten. Weil der Transistor Q1 gesperrt ist, lädt dieser Strom über die Diode D1 den Kondensator C2 auf so daß an diesem eine Aktivierungsspannung Us entsteht, welche dem Aktivierungseingang Ea des Brennersteuergeräts A zugeleitet wird. Damit kann das Brennersteuergerät im Zuge eines üblichen Steuerzyklus das Magnetventil MV öffnen und die Brennstoffzufuhr freigeben. Der Steuerzyklus umfaßt beispielsweise eine Vorspülperiode, eine Zündperiode, die Überwachung der Flammenbildung und schließlich die Freigabe des Hauptbrennstoffventils.

Sollte die Relaiswicklung RY unterbrochen sein, so fließt durch das Relais kein Strom, so daß seine Induktivität nicht aufgeladen und somit keine Aktivierungsspannung Us erzeugt werden kann. Ist die Relaiswicklung RY kurzgeschlossen, so entsteht ebenfalls keine Aktivierungsspannung, weil damit zugleich auch die Reihenschaltung von Diode D1 und Kondensator C2, d.h. die Gleichrichterschaltung kurzgeschlossen ist. Auf diese Weise ist sichergestellt, daß bei einem Fehler im bistabilen Relais RY keine Aktivierungsspannung Us entsteht und folglich das Brennersteuergerät A nicht freigegeben werden kann. Die Schaltungsanordnung ist also eigensicher.

Wird jedoch der zu überwachende Temperaturwert überschritten, so ist die Schaltungsanordnung derart ausgebildet, daß an der Basis des Steuertransistors Q1 eine solche Spannung steht, daß dieser Transistor ständig durchgeschaltet ist und somit ein Gleichstrom durch die Relaiswicklung RY fließt, welcher das bistabile Relais zum Ansprechen bringt. Damit unterbricht der Relaiskontakt ry in der Stromversorgungszuleitung zwischen Netzleitung PH und Eingang E1 des Brennersteuergeräts A die Stromzufuhr und schaltet das Brennersteuergerät A ab. Da das Relais bistabil ist, behält es seine auf diese Weise eingenommene Schaltlage mit geschlossenem Kontakt ry1, selbst wenn die Gleichspannung an der Basis BQ des Steuertransistors Q1 verschwinden und der Transistor Q1 sperren sollte. Es muß von einem elektrischen Gegenstrom zurückgestellt werden.

Die Erzeugung der bei Normalbetrieb der Basis BQ des Transistors Q1 zugeführten Impulsspannung, von beispielsweise 10kHz, erfolgt mit Hilfe des Kipposzillators Os. Er enthält, wie üblich, einen Spannungsvergleicher IC1, dessen invertierender Eingang (-) mit einem RC-Glied, bestehend aus dem Widerstand R5 und dem Kondensator C1, beschaltet ist, während der nicht-invertierende Eingang (+) an einer vorgegebenen Gleichspannung liegt. Eine Widerstandskette bestehend aus den Widerständen R1 bis R4 ist zwischen Masse und die Steuerelektrode BQ des Transistors Q1 eingeschaltet.

Die Spannung am nicht invertierenden Eingang (+) des Vergleichers IC1 wird durch den Spannungsteiler R1, R6, R7 bestimmt, der zwischen Masse und der negativen Versorgungsspannung UN liegt. Die Höhe dieser Spannung wird, wie die Schaltung zeigt, durch den Übertemperaturschalter HL beeinflußt, welcher normalerweise geschlossen ist. Das die Oszillatorschwingungen bewirkende RC-Glied R5, C1 ist dabei nicht wie der Spannungsteiler R6, R7 an den Schaltungspunkt U1 zwischen den Widerständen R1 und R2, sondern an den Schaltungspunkt U2 zwischen den Widerständen R2 und R3 angeschlossen. Der Widerstand R3 liegt folglich im Rückkopplungszweig, während der weitere Widerstand R4 den Ausgang des Vergleichers IC1 mit der Basis BQ des Transistors Q1 verbindet. Bei geschlossenem Übertemperaturschalter HL wird die Spannung am nicht invertierenden Eingang (+) durch den zwischen Masse und die negative Versorgungsspannung UN eingeschalteten Spannungsteiler R1, R6, R7 bestimmt. Bei schwingendem Oszillator übersteigt die am invertierenden Eingang (-) stehende Spannung, die am nicht invertierenden Eingang (+) stehende Spannung. Der Oszillator schwingt und erzeugt an seinem Ausgang Impulse, welche an die Basis BQ des Transistors Q1 gelangen und dort einen impulsweisen Stromfluß durch das Relais RY bewirken. Übersteigt hingegen die Temperatur den Grenzwert, so öffnet der Übertemperaturschalter HL, so daß der Widerstand R7 unwirksam wird. Die Spannung am nicht invertierenden Eingang (+) ist dann durch die Spannung am Schaltungspunkt U1 vorgegeben, welche über den Widerstand R6 an diesen Eingang gelangt. Diese Spannung ist jedoch höher als die vom Schaltungspunkt U2 über den Widerstand R5 abgegriffene Spannung für den invertierenden Eingang (-). Folglich liefert der Vergleicher IC1 an seinem Ausgang ständig ein Ausgangssignal, welches über den Widerstand R4 den Transistor Q1 dauerhaft durchschaltet und das Relais RY zum Ansprechen bringt. Damit geht die Schaltungsanordnung, wie oben erwähnt, in die Verriegelungsstellung und schaltet das Brennersteuergerät A über den Kontakt ry ab.

Soll nach einer solchen Sicherheitsabschaltung das Brennersteuergerät wieder in Betrieb genommen werden, so ist zwar der Übertemperaturschalter HL infolge Verschwindens der Übertemperatur wieder geschlossen. Das bistabile Relais RY behält jedoch seine Schaltlage bei. Es muß elektrisch in seine Ruhestellung zurückgeführt werden. Hierzu wird bei geschlossenem Kontakt ry1 der Kondensator C2 über die Reihenschaltung von Widerstand R8 und Diode D2 aus der Wechselspannungsklemme PH aufgeladen. Beim Schließen des Tastschalters RS entlädt sich der Kondensator C2 über das Relais RY, so daß dieses von einem zum Ansprechstrom entgegengesetzten Rückstellstrom durchflossen wird. Es nimmt wieder seine ursprüngliche Schaltlage mit geschlossenem Kontakt ry0 und offenem Kontakt ry1 ein. Die Rückstellung mittels der Taste RS kann in Form einer Fernrückstellung von einem beliebigen Ort aus erfolgen.

## Patentansprüche

1. Brennersteuergerät mit einem nicht selbstrückstellenden Temperaturgrenzschalter, der ein durch einen Übertemperaturschalter (HL) steuerbares Relais (RY) mit einem in der Stromzufuhrleitung (E1) zum Brennersteuergerät (A) liegenden Kontakt (ry) aufweist, **dadurch gekennzeichnet**, daß
a) das Brennersteuergerät (A) außer zwei Stromversorgungseingängen (E1, E0) wenigstens einen zusätzlichen eigensicheren Aktivierungseingang (Ea) aufweist und nur beim Anstehen eines Aktivierungssignals (Uₛ) einschaltbar ist;
b) das Relais (RY) ein an den Ausgang eines Steuertransistors (Q1) angeschlossenes bistabiles Relais ist, dessen Kontakt (ry) bei angesprochenem Relais die Stromzufuhr zum Brennersteuergerät (A) unterbricht;
c) zur Erzeugung des Aktivierungssignals (Us) eine Gleichrichterschaltung (D1, C2) an das Relais (RY) angeschlossen ist;
d) die Steuerelektrode (BQ) des Steuertransistors (Q1) an den Ausgang eines Oszillators (Os) angeschlossen ist; und
e) der Übertemperaturschalter (HL) derart in den Oszillatorkreis eingeschaltet ist, daß beim Ansprechen des Übertemperaturschalters die Oszillatorschwingungen abreissen und der Steuertransistor (Q1) in einen ständig stromleitenden Zustand und damit das Relais (RY) zum Ansprechen gebracht wird.

2. Schaltungsanordnung nach Anspruch 1, **dadurch gekennzeichnet**, daß die Gleichrichterschaltung (D1, C2) aus einer der Relaiswicklung (RY) parallelgeschalteten Reihenschaltung einer Diode (D1) mit einem Kondensator (C2) besteht und der Verbindungspunkt von Diode und Kondensator an den Aktivierungseingang (Ea) des Brennersteuergeräts (A) angeschlossen ist.

3. Schaltungsanordnung nach Anspruch 1 oder 2, **dadurch gekennzeichnet**, daß die Kollektor-Emitterstrecke des Steuertransistors (Q1) in Reihe mit der Relaiswicklung (RY) zwischen Masse (N) und einer Versorgungsgleichspannung (UN) eingeschaltet ist und die Steuerelektrode (BQ) des Steuertransistors (Q1) mit dem Ausgang eines Oszillators (Os) in Verbindung steht.

4. Schaltungsanordnung nach Anspruch 3, **dadurch gekennzeichnet,** daß
a) der Oszillator (Os) einen Vergleicher (IC1) enthält;
b) an den einen Eingang (-) des Vergleichers (IC1) der Verbindungspunkt einer aus einem Widerstand (R5) und einem Kondensator (C1) bestehenden Rückkopplungsschaltung angeschlossen ist; und
c) an den anderen Eingang (+) des Vergleichers eine durch den Übertemperaturschalter (HL) beeinflußte Gleichspannung geführt ist.

5. Schaltungsanordnung nach Anspruch 4, **gekennzeichnet durch**
a) eine zwischen Masse (N) und die Steuerelektrode (BQ) des Steuertransistors (Q1) eingeschaltete Widerstandskette (R1 bis R4), deren erste drei Widerstände (R1 bis R3) zwischen Masse und dem Vergleicherausgang liegen, während ein vierter Widerstand (R4) zwischen Vergleicherausgang und Steuerelektrode liegt; wobei
b) ein erster Widerstand (R1) zwischen Masse und dem Anschluß eines den Übertemperaturschalter (HL) enthaltenden Spannungsteilers (R6, R7) liegt;
c) ein zweiter Widerstand (R2) zwischen dem genannten Anschluß (U1) und dem Anschluß (U2) der Rückkopplungsschaltung (R5, C1) liegt; und
d) ein dritter Widerstand (R3) zwischen den letztgenannten Anschluß (U2) und den Vergleicherausgang eingeschaltet ist.

6. Schaltungsanordnung nach Anspruch 5, **dadurch gekennzeichnet** daß der Spannungsteiler einen zwischen den erstgenannten Anschluß (U1) und den anderen Eingang (+) des Vergleichers eingeschalteten fünften Widerstand (R6) sowie eine aus einem sechsten Widerstand (R7) und dem Übertemperaturschalter (HL) bestehende Reihenschaltung aufweist, welche zwischen jenen anderen Eingang und die Versorgungsgleichspannung (UN) eingeschaltet ist.

7. Schaltungsanordnung nach einem der Ansprüche 1 bis 6, **dadurch gekennzeichnet,** daß der Verbindungspunkt von Diode (D1) und Kondensator (C2) der ersten Gleichrichterschaltung (D1, C2) über eine zweite Gleichrichterschaltung (R8, D2) sowie einen Arbeitskontakt (ry1) des Relais (RY) an eine Wechselspannungsklemme (PH) anschließbar ist.

8. Schaltungsanordnung nach Anspruch 7, **dadurch gekennzeichnet**, daß die Diode (D1) der ersten Gleichrichterschaltung (D1, C2) durch einen Rückstellschalter (RS) überbrückbar ist.

## Claims

1. A burner control apparatus comprising a non-automatic reset temperature limit switch having a relay (RY) which can be controlled by means of an excess temperature switch (HL) and has a contact (ry) connected in the current supply line (E1) to said burner control apparatus (A), **characterized in that :**
a) the burner control apparatus (A) besides two current supply inputs (E1, E0) has at least one addition failsafe activating input (Ea) and can be switched on only if an activating signal (Us) is present;
b) said relay (RY) is a bistable relay connected to the input of a control transistor (Q1) with the contact (ry) of said relay interrupting the current supply to said burner control apparatus (A) when the relay is energized;
c) for generating the activating signal (Us) a rectifier circuit (D1, C2) is connected to said relay (RY);
d) the control electrode (BQ) of the control transistor (Q1) is connected to the output of an oscillator (Os); and
e) the excess temperature switch (HL) is connected into the oscillator circuit in such a way that when the excess temperature switch is activated, the oscillations of the oscillator disappear and the control transistor (Q1) is transferred into a continuously conducting condition therewith rendering the relay (RY) pulling-in.

2. The circuit of claim 1, **characterized in that** the rectifier circuit (D1, C2) consists of a series circuit comprising a diode (D1) and a capacitor (C2) with said series circuit being connected in parallel to the relay coil (RY), and that the junction between said diode and said capacitor is conected to the activating input (Ea) of the burner control apparatus (A).

3. The circuit of claim 1 or 2, **characterized in that** the collector-emitter-path of the control transistor (Q1) is connected in series with the relay coil (RY) between ground (N) and a DC supply voltage (UN) and the control electrode (BQ) of said control transistor (Q1) communicates with the output of an oscillator (Os).

4. The circuit of claim 3, **characterized in that :**
a) the oscillator (Os) comprises a comparator (IC1);
b) the junction of a feedback circuit consisting of a resistor (R5) and a capacitor (C1) is connected to one of the inputs (-) of said comparator (IC1); and
c) a DC voltage controlled by said excess temperature switch (HL) is supplied to the other input (+) of said comparator.

5. The circuit of claim 4, **characterized by:**
a) a resistor chain (R1 to R4) connected between ground (N) and the control electrode (BQ) of the control transistor (Q1) with the first three resistors (R1 to R3) of said change being connected between ground and the output of said comparator, and a fourth resistor (R4) being connected between the output of said comparator and said control electrode; whereat
b) a first resistor (R1) is connected between ground and the tab of a voltage divider (R6, R7) comprising said excess temperature switch (HL);
c) a second resistor (R2) is connected between said junction (U1) and the junction (U2) of the feedback circuit (R5, C1); and
d) a third resistor (R3) is connected between the last-mentioned junction (U2) and the output of said comparator.

6. The circuit of claim 5, **characterized in that** the voltage divider comprises a fifth resistor (R6) which is connected between the first-mentioned junction (U1) and the other input (+) of said comparator, and further comprises a series circuit consisting of a sixth resistor (R7) and said excess temperature switch (HL), with said series circuit being connected between said other input and the DC supply voltage (UN).

7. The circuit according to one of the claims 1 to 6, **characterized in that** the junction between the diode (D1) and the capacitor (C2) of the first rectifier circuit (D 1, C2) is connected to an AC terminal (PH) via a second rectifier circuit (R8, D2) and a normally open contact (ry1) of the relay (RY).

8. The circuit of claim 7, **characterized in that** the diode (D1) of the first rectifier circuit (D1, C2) can be bridged by means of a reset switch (RS).

## Revendications

1. Dispositif de commande de brûleur comprenant un interrupteur de limitation de température sans rappel automatique, qui comporte un relais (RY) pouvant être commandé par l'intermédiaire d'un interrupteur de température excessive (HL) et comprenant un contact (ry) situé dans la ligne d'alimentation en courant (E1) du dispositif de commande de brûleur (A), caractérisé en ce que
a) le dispositif de commande de brûleur (A) comporte, en dehors de deux entrées d'alimentation en courant (E1, E0), au moins une entrée supplémentaire d'activation (Ea) à sécurité intrinsèque et ne peut être mis sous tension qu'en présence d'un signal d'activation (US);
b) le relais (RY) est un relais bistable, qui est connecté à la sortie d'un transistor de commande (Q1) et dont le contact (ry) interrompt l'arrivée de courant au dispositif de commande de brûleur (A), lorsque le relais se déclenche;
c) pour la production du signal d'activation (Us), un circuit redresseur (D1,C2) est connecté au relais (RY);
d) l'électrode de commande (BQ) du transistor de commande (Q1) est connectée à la sortie d'un oscillateur (Os); et
e) l'interrupteur de température excessive (HL) est inséré dans le circuit de l'oscillateur de telle sorte que, lors du déclenchement de l'interrupteur de température excessive, les oscillations de l'oscillateur cessent, le transistor de commande (Q1) soit placé dans un état de conduction permanente du courant et le relais (RY) soit ainsi amené à se déclencher.

2. Montage selon la revendication 1, caractérisé en ce que le circuit redresseur (D1,C2) est constitué par un circuit série formé d'une diode (D1) et d'un condensateur (C2) et branché en parallèle avec l'enroulement (RY) du relais, et le point de jonction de la diode et du condensateur est connecté à l'entrée d'activation (Ea) du dispositif de commande de brûleur (A).

3. Montage selon la revendication 1 ou 2, caractérisé en ce que la voie collecteur - émetteur du transistor de commande (Q1) est branchée en série avec l'enroulement (RY) du relais, entre la masse (N) et une tension continue d'alimentation (UN), et l'électrode de commande (BQ) du transistor de commande (Q1) est reliée à la sortie d'un oscillateur (Os).

4. Montage selon la revendication 3, caractérisé en ce que
a) l'oscillateur (Os) contient un comparateur (IC1);
b) le point de jonction d'un circuit de réaction constitué d'une résistance (R5) et d'un condensateur (C1) est connecté à une entrée (-) du comparateur (IC1); et
c) une tension continue sur laquelle influe l'interrupteur de température excessive (HL) est appliquée à l'autre entrée (+) du comparateur.

5. Montage selon la revendication 4, caractérisé par
a) une chaîne de résistances (R1 à R4), branchée entre la masse (N) et l'électrode de commande (BQ) du transistor de commande (Q1) et dont trois premières résistances (R1 à R3) sont disposées entre la masse et la sortie du comparateur, tandis qu'une quatrième résistance (R4) est disposée entre la sortie du comparateur et l'électrode de commande;
b) une première résistance (R1) étant disposée entre la masse et la borne d'un diviseur de tension (R6,R7) contenant l'interrupteur de température excessive (HL);
c) une deuxième résistance (R2) étant disposée entre ladite borne (U1) et la borne (U2) du circuit de réaction (R5, C1); et
d) une troisième résistance (R3) étant branchée entre la borne indiquée en dernier lieu (U2) et la sortie du comparateur.

6. Montage selon la revendication 5, caractérisé en ce que le diviseur de tension comporte une cinquième résistance (R6), qui est branchée entre la borne (U1) indiquée en premier lieu et l'autre entrée (+) du comparateur, ainsi qu'un circuit série constitué par une sixième résistance (R7) et par l'interrupteur de température excessive (HL) et qui est branché entre cette autre entrée et la tension continue d'alimentation (UN).

7. Montage selon l'une des revendications 1 à 6, caractérisé en ce que le point de jonction de la diode (D1) et du condensateur (C2) du premier circuit redresseur (D1, C2) peut être connecté, par l'intermédiaire d'un second circuit redresseur (R8,D2) ainsi que d'un contact de travail (ry1) du relais (RY), à une borne de tension alternative (PH).

8. Montage selon la revendication 7, caractérisé en ce que la diode (D1) du premier circuit redresseur (D1,C2) peut être shuntée par un interrupteur à rappel (RS).
